# EUROPÄISCHE PATENTSCHRIFT

(11) **EP 1 147 873 B1**
(45) Veröffentlichungstag und Bekanntmachung des Hinweises auf die Patenterteilung: **19.05.2004**
(21) Anmeldenummer: 01107537.1
(22) Anmeldetag: 27.03.2001
(51) Int. Cl.: B29C 45/37, B29C 45/17

(54) **Schriftstempel, insbesondere zum Einsatz in Werkzeugen zum Spritzgiessen, Spritzpressen o.dgl. von Formmassen**
Stamp member specially for use in machine tools for injection molding, injection compression molding or the like of moulding materials
Tampon d'impression s'utilisant notamment pour mouler par injection, par injection-compression ou similaire des matières moulables

(30) Priorität: 17.04.2000 DE 10018919
(43) Veröffentlichungstag der Anmeldung: 24.10.2001
(73) Patentinhaber: Glaab, Christof, 63828 Kleinkahl (DE)
(72) Erfinder: Glaab, Christof, 63828 Kleinkahl (DE)
(74) Vertreter: Berdux, Klaus, Dipl.-Ing.

(56) Entgegenhaltungen:
- PATENT ABSTRACTS OF JAPAN vol. 1999, no. 4, 30. April 1999 (1999-04-30) -& JP 11 000935 A (FUJI PHOTO FILM CO LTD), 6. Januar 1999 (1999-01-06)
- PATENT ABSTRACTS OF JAPAN vol. 1995, no. 4, 31. Mai 1995 (1995-05-31) -& JP 07 009456 A (SEKISUI CHEM CO LTD), 13. Januar 1995 (1995-01-13)
- PATENT ABSTRACTS OF JAPAN vol. 16, no. 153 (M-1235), 15. April 1992 (1992-04-15) -& JP 04 007114 A (SHARP CORP), 10. Januar 1992 (1992-01-10)
- PATENT ABSTRACTS OF JAPAN vol. 6, no. 213 (M-167), 26. Oktober 1982 (1982-10-26) -& JP 57 117919 A (MATSUSHITA DENKO KK), 22. Juli 1982 (1982-07-22)

## Beschreibung

Die vorliegende Erfindung betrifft einen Schriftstempel, insbesondere zum Einsatz in Werkzeugen zum Spritzgießen, Spritzpressen oder dergl. von Formmassen mit einem Wechseistempel, der von der Werkzeugtrennebene aus entnehmbar ist.

Aus Ullmann, 15. Auflage Seite 321 ff ist es bekannt, Formteile aus härtbaren Formmassen unter Einwirkung von Druck und Hitze in geschlossenen Formwerkzeugen herzustellen, dabei wird die Formmasse geschmolzen (bzw. erweicht), geformt und gehärtet. Die Bedeutung dieser Formtechnik rührt daher, daß sie es ermöglicht, auch kompliziert gestaltete Formteile rationell in einem Arbeitsgang herzustellen, wenn die Stückzahl groß genug ist, um die Kosten für das Formwerkzeug zu tragen.
Formteile, wie beispielsweise Kisten, Klemmhebel, Abdeckplatten , Kabelhalter, werden beispielsweise bei gleicher Form in verschiedenen Farben oder für verschiedene Kunden gefertigt und müssen deshalb je nach Farbe, Kunde oder Material unterschiedlich gekennzeichnet werden. Die Kennzeichnung erfolgt mit einem Wechselstempel. Bisher ist der Wechselstempel meistens in einer Ausnehmung des Werkzeugunterteils (=Auswerferseite) eingesetzt und über eine Schraube befestigt, die von der Werkzeugrückseite aus durchgesteckt wird, wobei das Werkzeugunterteil von der Schraube quasi durchdrungen wird. Dies hat den großen Nachteil, daß zum Wechseln des Wechselstempels die Auswerferseite komplett umgebaut werden muß, d.h. das Werkzeugunterteil muß von der Spritzmaschine entfernt und zerlegt werden, danach die durchgesteckte Schraube gelöst und der Wechselstempel entfernt werden. Dann erst kann ein neuer Wechselstempel eingesetzt und festgeschraubt sowie das Werkzeugunterteil auf die Maschine montiert werden. Dieser Vorgang dauert im Durchschnitt ca. 60 bis 90 min. und ist deshalb zeit- und kostenintensiv.
Darüber hinaus ist bei Formteilen gleicher Form und gleichen Farben , die aber wegen verschiedener Kunden unterschiedlich gekennzeichnet werden müssen, bei den bisherigen Wechselstempel und dem dazugehörigen Wechselvorgang nicht gewährleistet, daß die Formmasse auch in der Düsenseite der Maschine noch nach dem Wechselvorgangs in der notwendigen Qualität zur Verfügung steht und deshalb die Maschine gegebenenfalls neu angefahren werden muß.

Ferner ist es aus der JP 11000935 A bekannt, einen aus der Werkzeugtrennebene entnehmbaren Wechselstempel mit einer seitlich in einem Werkzeugunterteil vorgesehenen Nut-Schiebekeil-Vorrichtung zu befestigen bzw. zu lösen. Dabei wird unter der Werkzeugtrennebene die Ebene verstanden, die zwischen der Auswerferseite und der Düsenseite liegt, also die Ebene die zur Entformung des Spritzteils nach dem Spritzvorgang auseinander gefahren wird. Zum Lösen des Wechselstempels ist es erforderlich den Schiebekeil komplett aus der Nut im Werkzeugunterteil seitlich aus dem Werkzeugunterteil und nicht von der Werkzeugtrennebene aus herauszuziehen, dann den Stempel zu wechseln, danach den Schiebekeil um 180° um die Längsachse des Keils zu drehen und anschließend den Schlebekeil wieder in die Nut zu schieben bis der Keil den neuen Stempel befestigt. Diese Nut-Schiebekeil-Vorrichtung ist In bezug auf die Herstellung des Werkzeugunterteils aufwendig und In bezug auf den Wechselvorgang zeitaufwendig.

Aufgabe der vorliegenden Erfindung ist es die oben genannten Nachteile zu vermeiden und einen Schriftstempel zu schaffen, dessen Wechselstempel schnell und einfach von der Werkzeugtrennebene aus ausgewechselt werden kann und der eine einfache Konstruktion des Werkzeuges ermöglich.

Zur Lösung dieser Aufgabe wird erfindungsgemäß ein Wechselstempel gemäß dem Kennzeichen des Anspruches 1 vorgeschlagen.

Durch die Erfindung wird es nunmehr vorteilhaft möglich in einem Werkzeugteil eine einfache Ausfräsung vorzusehen und in dieser den Grundkörper mit dem lösbar befestigten Wechselstempel zu befestigen

Ein Wechseln des Wechselstempels ist nunmehr durch einfaches Lösen der Wechselstempelbefestigung möglich und zwar von der Werkzeugtrennebene/Werkzeugunterteilinnenseite aus. Das Werkzeugunterteil muß nicht mehr entfernt werden. Der Wechselvorgang kann in kürzester Zeit ca. 30 bis 45 sec. erfolgen.
Darüberhinaus entfallen durch die Erfindung die bisher notwendigen Durchdringungen (Schrauben, Nuten) im Werkzeugunterteil. Dies hat neben der einfachen Herstellung des Werkzeugunterteils den weiteren Vorteil, daß eine Werkzeugkühlung nunmehr auch unterhalb des Schriftstempels möglich ist, was bisher wegen der Durchdringungen nicht erfolgen konnte.

Weitere vorteilhafte Ausgestaltungen der Erfindung sind in den Unteransprüchen sowie der nachfolgenden Beschreibung der Zeichnungen angegeben.

Es veranschaulicht
- Fig. 1: Schriftstempel in eingebautem Zustand in Schnittdarstellung
- Fig. 2: Grundkörper in Draufsicht
- Fig. 3: Grundkörper in Schnittdarstellung
- Fig. 4: Wechselstempel in Draufsicht
- Fig. 5: Wechselstempel in Seitenansicht
- Fig. 6: Druckklinke in Seitenansicht
- Fig. 7: Druckklinke in Draufsicht
- Fig. 8: Hubklinke in Seitenansicht

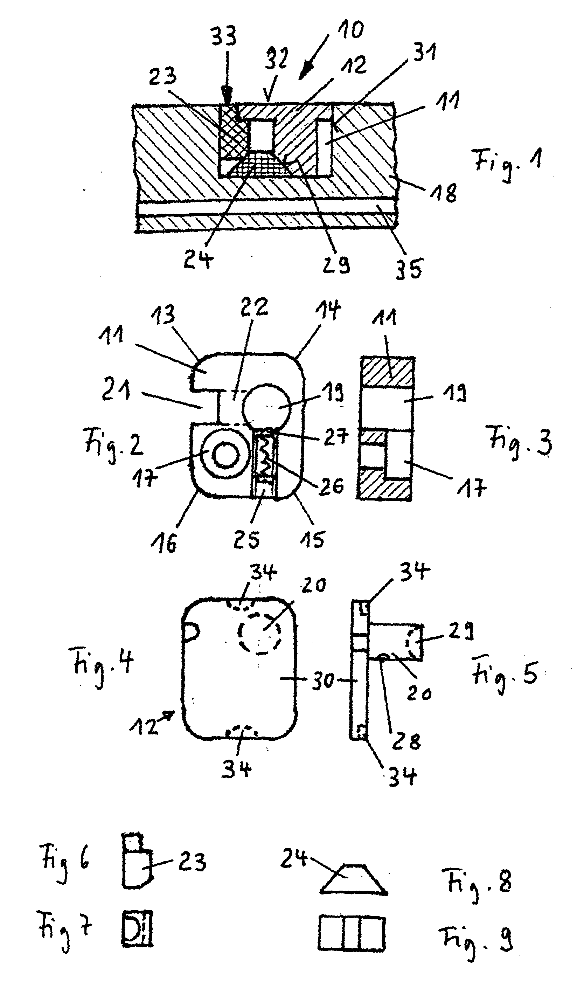

Die in den Fig. 6 - 9 dargestellten Druck- und Hubklinken 23, 24 sind als Lösevorrichtung in den Grundkörper 11 eingesetzt (s. Fig. 1), wobei die Hubklinke in Wirkverbindung mit einer Druckfläche 29 des Wechselstempels steht.
Der Wechselstempel 12 weist eine entsprechend dem Grundkörper 11 rechteckig mit abgerundeten Ecken ausgebildete Stempelplatte 30 (s. Fig. 1) auf. Es ist selbstverständlich auch möglich den Wechselstempel und Grundkörper rund oder in einer anderen Form auszubilden.
Der Kühlkanal, der aufgrund der Erfindung nunmehr auch direkt unter dem Schriftstempel 10 angeordnet werden kann, ist in der Fig.1 mit 35 bezeichnet.

Die Stempelplatte ist frei beschriftbar wobei z.B. die Bauteilbezeichnungen, Material , Kennzeichnungen, Datumsangaben, Artikel Nr. vorzugsweise eingraviert sind (Gravurtiefe meist ca. 0,1 - 0,15 mm). Der Wechselstempel 11 ist vorzugsweise aus Werkzeugstahl gefertigt.

Die Montage des erfindungsgemäßen Schriftstempels 10 ist wie folgt
1. Rechtecktasche 31 in Werkzeugunterteil 18 entsprechend den Maßen des Grundkörpers 11 fräsen,.
2. Befestigungsgewinde in Tasche 31 einbringen.
3. Einsetzen des Grundkörpers 11 mit Hubklinke 24 in die Tasche 31.
4. Einschrauben der Befestigungsschraube in Stufenbohrung 17.
5. Einsetzen der Druckklinke 23.
6. Einstecken des Wechselstempels 12 (Stempelführung 20 in Bohrung 19) bis die Rasterkugel 27 in die Ausnehmung 28 einrastet, so daß der Stempel 12 vor dem Herausfallen geschützt ist und die Oberfläche 32 des Wechselstempels 12 mit dem Werkzeugoberteil 18 eine Ebene bildet.

Das Wechseln des Wechselstempels ist wie folgt:

Durch Druck mit einem Stößel, vorzugsweise aus Kupfer auf die Druckklinke 23 in Pfeilrichtung 33 bewegt sich diese nach unten, die Hubklinke 23 wird nach rechts bewegt und hebt den Wechselstempel 11 an, wobei die Rasterung. (Kugel 27, Ausnehmung 28) aufgehoben wird. Mit Hilfe der Aussparungen 34 an der Stempelunterseite 35 (s. Fig. 4 und 5) kann der Wechselstempel 11 leicht entnommen und gegen einen anderen Stempel ausgetauscht werden.

Beim obigen Ausführungsbeispiel ist der Schriftstempel in der Werkzeugunterseite (=Auswerferseite) vorgesehen und deshalb die Stempelung an der Formteilinnenseite angebracht.
Es ist selbstverständlich aber auch möglich den Schriftstempel nach der Erfindung seitlich oder auch an der Werkzeugoberseite (=Düsenseite) vorzusehen. Im letzteren Fall ist dann der Stempel z.B. Umweltzeichen an der Formteilaußenseite sichtbar.

## Patentansprüche

1. Schriftstempel, insbesondere zum Einsatz in Werkzeugen zum Spritzgießen, Spritzpressen oder dergl. von Formmassen, mit einem Wechselstempel, der von der Werkzeugtrennebene aus entnehmbar ist, wobei
der Wechselstempel (12) in einem Grundkörper (11) angeordnet ist, und im Grundkörper (11) eine Lösevorrichtung (23, 24) für den Wechselstempel (12) vorgesehen ist, **dadurch gekennzeichnet, daß** die Lösevorrichtung (23, 24) eine in den Grundkörper (11) eingesetzte Hub-Druckklinke-Einheit (23, 24) ist, wobei die Hubklinke (24) in Wirkverbindung mit einer Druckfläche (29) des Wechselstempels (12) steht.

2. Schriftstempel nach Anspruch 1,
**dadurch gekennzeichnet, daß** im Grundkörper (11) eine Befestigungsvorrichtung (26) für den Wechselstempel (12) vorgesehen ist.

3. Schriftstempel nach einem der Ansprüche 1 oder 2,
**dadurch gekennzeichnet, daß** die Befestigungsvorrichtung (26) eine in den Grundkörper (11) eingeschraubte Rasterschraube (26) ist, deren federbelastete Rasterkugel (27) in eine Ausnehmung (28) des Wechselstempels (12) eingreift.

4. Schriftstempel nach einem der Ansprüche 1 bis 3,
**dadurch gekennzeichnet, daß** der Wechselstempel (12) rechteckig mit abgerundeten Ecken (13-16) ausgebildet ist.

5. Schriftstempel nach einem der Ansprüche 1 bis 4,
**dadurch gekennzeichnet, daß** der Wechselstempel (12) eine Stempelplatte (30) für Bauteilbezeichnungen, Materialkennzeichnungen, Datumsangaben oder dergl. aufweist, die vorzugsweise in Form von Gravuren aufgebracht werden können.

6. Schriftstempel nach einem der Ansprüche 1 bis 5,
**dadurch gekennzeichnet, daß** der Wechselstempel (12) aus Stahl gefertigt ist.

7. Schriftstempel nach einem der Ansprüche 1 bis 6,
**dadurch gekennzeichnet, daß** der Schriftstempel (10) in einer Rechtecktasche (31) im Werkzeugunterteil (=Auswerferseite) des Werkzeuges eingesetzt und vorzugsweise über eine Befestigungsschraube befestigt ist.

8. Schriftstempel nach einem der Ansprüche 1 bis 7,
**dadurch gekennzeichnet, daß** die Stempelplatte (30) eben ist und keine äußerlich auffälligen Demontagehilfen, wie Nuten, Schlitze oder dergl. aufweist.

## Claims

1. Punch, especially for use in moulds for injection moulding, transfer moulding or the like of moulding compounds, with an interchangeable punch, which can be removed from the mould parting plane, the interchangeable punch (12) being arranged in a base body (11), and a release device (23, 24) for the interchangeable punch (12) being provided in the base body (11), **characterized in that** the release device (23, 24) is a lifting-pressing catch unit (23, 24) inserted into the base body (11), the lifting catch (24) being in operative connection with a pressing face (29) of the interchangeable punch (12).

2. Punch according to Claim 1, **characterized in that** a fastening device (26) for the interchangeable punch (12) is provided in the base body (11).

3. Punch according to either of Claims 1 and 2, **characterized in that** the fastening device (26) is an indexing screw (26), which is screwed into the base body (11) and the spring-loaded indexing ball (27) of which engages in a recess (28) of the interchangeable punch (12).

4. Punch according to one of Claims 1 to 3, **characterized in that** the interchangeable punch (12) is formed in a rectangular manner with rounded corners (13-16).

5. Punch according to one of Claims 1 to 4, **characterized in that** the interchangeable punch (12) has a stamping plate (30) for component designations, material identifications, date indications or the like, which can preferably be applied in the form of engravings.

6. Punch according to one of Claims 1 to 5, **characterized in that** the interchangeable punch (12) is produced from steel.

7. Punch according to one of Claims 1 to 6, **characterized in that** the punch (10) is inserted in a rectangular pocket (31) in the lower mould part (= ejector side) of the mould and is preferably fastened by means of a fastening screw.

8. Punch according to one of Claims 1 to 7, **characterized in that** the stamping plate (30) is planar and has no externally noticeable removal aids, such as grooves, slots or the like.

## Revendications

1. Poinçon d'inscription destiné en particulier à être utilisé dans des outils pour le moulage par injection, le moulage par transfert et analogues de matières à mouler, comprenant un poinçon interchangeable qui peut être retiré du plan de joint de l'outil, dans lequel le poinçon interchangeable (12) est disposé dans un corps de base (11) avec un dispositif de séparation (23, 24) prévu, dans le corps de base (11), pour le poinçon interchangeable (12),
**caractérisé en ce que**
le dispositif de séparation (23, 24) est une unité à taquets de soulèvement et de pression (23, 24) encastrée dans le corps de base (11), le taquet de soulèvement (24) étant en liaison effective avec une surface de pression (29) du poinçon interchangeable (12).

2. Poinçon d'inscription selon la revendication 1,
**caractérisé en ce que**
dans le corps de base (11), un dispositif de fixation (26) est prévu pour le poinçon interchangeable (12).

3. Poinçon d'inscription selon un des revendications 1 ou 2,
**caractérisé en ce que**
le dispositif de fixation (26) est un ressort d'accrochage (26) vissé dans le corps de base (11) et dont la bille d'arrêt (27) chargée par ressort, est engagée dans un évidement (28) du poinçon interchangeable (12).

4. Poinçon d'inscription selon un des revendications 1 à 3,
**caractérisé en ce que**
le poinçon interchangeable (12) est de forme rectangulaire à angles arrondis (13-16).

5. Poinçon d'inscription selon un des revendications 1 à 4,
**caractérisé en ce que**
le poinçon interchangeable (12) présente une table de poinçon (30) pour l'identification de pièces, les marquages de matières, l'indication de références ou analogues, qui peuvent être présentés de préférence sous la forme de gravures.

6. Poinçon d'inscription selon un des revendications 1 à 5,
**caractérise en ce que**
le poinçon interchangeable (12) est en acier.

7. Poinçon d'inscription selon un des revendications 1 à 6,
**caractérisé en ce que**
le poinçon d'inscription (10) est encastré dans une poche rectangulaire (31) prévue dans la partie inférieure de l'outil (= côté éjecteur) de l'outil, et est de préférence fixé par une vis de fixation.

8. Poinçon d'inscription selon un des revendications 1 à 7,
**caractérisé en ce que**
la table de poinçon (30) est plane et ne présente aucune aide de démontage visible de l'extérieur telle que des rainures, fentes ou analogues.
